Europäisches Patentamt

European Patent Office

Office européen des brevets

(11) Publication number : **0 517 546 A1**

(12) # EUROPEAN PATENT APPLICATION

(21) Application number : **92305190.8**

(22) Date of filing : **05.06.92**

(51) Int. Cl.$^5$ : **B60G 17/005, F16F 9/44**

(30) Priority : **06.06.91 GB 9112179**

(43) Date of publication of application :
**09.12.92 Bulletin 92/50**

(84) Designated Contracting States :
**BE DE ES FR GB IT NL**

(71) Applicant : **AVELING BARFORD (MACHINES) PLC**
**Invicta Works Grantham**
**GB-Lincolnshire NG31 6JE (GB)**

(72) Inventor : **Lee, David**
**111, Bukit Batok West**
**avenue 6 23 132 Singapore 2365 (SG)**
Inventor : **Denton, Michael**
**6 Fernwood Drive Brompton**
**Northallerton Norh Yorkshire (GB)**

(74) Representative : **Findlay, Alice Rosemary**
**Lloyd Wise, Tregear & Co. Norman House**
**105-109 Strand**
**London WC2R 0AE (GB)**

(54) Improvements in and relating to vehicle suspensions.

(57)   A vehicle having one or more hydraulic shock absorbers (42) is described. The vehicle includes means for activating a lock which prevents hydraulic fluid flow within the shock absorber(s) (42) and thereby to prevent vertical movement of at least the rear of the vehicle chassis. Control means is provided for controlling the activation means which may also be operable to alternately activate a raise/lower valve (10), for adjusting the height of the vehicle chassis, and a levelling valve, for maintaining the height of the vehicle chassis to a preset level. The control means may comprise a manual pilot 3/2 valve (12). The activator means may comprise a pneumatic piston cylinder device (20) operatively connected to a valve which controls fluid flow in the shock absorber(s) of the vehicle.

Fig.5.

Fig.4.

EP 0 517 546 A1

This invention relates to vehicles such as trailers or semi-trailers.

A number of different types of vehicle suspension systems are known. Such systems serve to support a vehicle chassis on its axles and to transform the sharp jolts from the road into softer, damped oscillations so that only small forces are transmitted to the vehicle body itself. One popular type of suspension system is commonly called "air suspension", in which system the forces are pneumatically cushioned. The suspension consists of a number of chambers filled with compressed air, hereinafter referred to as "air springs", which may be either in the form of a cylinder containing a piston which can move inside it, or in the form of a compressed air spring bellows. In either case, movement of the axles tends to increase the compression of the air which therefore resists the axle movement and reduces the resultant vehicle body movement.

The stiffness of air springs is relatively low and, in order that they be capable of supporting any significant degree of loading, they must be capable of relatively large deflections. As a result of this, the range of axle travel of vehicles with air suspension is large.

When a large mass is carried on low stiffness supports, under certain conditions, excessive support deflections result. Trailers fitted with an air suspension system are therefore prone to excessive up and down vertical movement, i.e., bouncing. If the system does not itself have significant natural damping sufficient to reduce this bouncing to an acceptable amount, a damping element has to be provided. Accordingly on commercial vehicles fitted with an air suspension system, each axle is equipped with at least one and usually two hydraulic dampers which serve to prevent certain types of road undulations from producing unacceptably large bouncing movement.

The practice has arisen in recent years of utilising the considerable travel of the air suspension to aid loading and unloading vehicles. Vehicles have been provided with a valve connected between the air reservoir and the air springs. This valve, commonly known and hereinafter referred to as a "raise/lower valve", is movable between five positions. These positions are generally referred to as "raise", "hold", "ride" and "lower", there being a "hold" position both for when the trailer bed has been raised and lowered as explained below. When the vehicle is travelling along the road, the raise/lower valve is in the "ride" position in which it itself is bypassed. In the "ride" position, there is free passage of air to a second valve, known as a "levelling valve", which serves to control the height of the suspension and hence the distance between the vehicle chassis and its axle and maintain this constant.

When the trailer is to be loaded from a loading bay, it is convenient to adjust the height of the rear of the trailer to match closely that of the loading bay.

Movement of the raise/lower valve to the "raise" or "lower" position serves to isolate the levelling valve and to cause either admission of air into, or release of air from, the suspension system so as to cause the rear of the trailer to rise or lower into the desired position. Once the desired position is achieved, the raise/lower valve is moved into the appropriate "hold" position, in both of which air is trapped in the air springs and the suspension is therefore fixed at the desired level.

It is obviously desirable that the trailer height be maintained at the desired level throughout the loading or unloading operation. However this cannot be achieved satisfactorily at present for the following reasons.

Firstly, the low stiffness of the air springs of the air suspension system results in large transient deflections of the rear end of the vehicle as each portion of the load, which may typically be in the form of a fork lift truck carrying a one tonne pallet, passes thereover, on loading or unloading. In recent years, increasingly long trailer lengths have been employed and the increased length tends to exacerbate the problem of movement on loading.

Secondly, as a loading operation is carried out, the load on the suspension system obviously increases which causes an increase in the pressure in the air springs. The mass of air in the air springs during loading is fixed by the raise/lower valve and therefore the increase in pressure inevitably results in a decrease in the volume of air in the springs which in turn results in the suspension, and therefore the rear of the trailer, progressively decreasing in height. This effect is reversed in an unloading operation and the trailer end therefore progressively rises as load is removed from the vehicle.

A vehicle in accordance with the invention has one or more hydraulic shock absorbers and means for activating a lock which prevents hydraulic fluid flow within the shock absorber(s).

The advantage of this arrangement is that, by preventing fluid flow within the hydraulic shock absorber or absorbers of a vehicle, these serve to provide extra resistance against movement of the vehicle end when it is loaded or unloaded. This prevents both of the effects discussed above from occurring. Thus the load bed height can be maintained constant and at the level of the loading bay.

Preferably control means are provided for the activator means which cause it to activate the lock when the vehicle is in one of a number of predetermined conditions.

The vehicle may be of the type which includes means for adjusting the vertical position of the chassis thereof in which case one of the predetermined vehicle conditions is suitably that the chassis has been raised above and/or lowered below its normal travel position by the adjustment means. The control means may include the adjustment means. This makes for a very practical arrangement, particularly in the case where the predetermined condition is that the vehicle bed has been raised/lowered.

If the vehicle means also includes levelling means, the control means may include a control device operative to alternately activate the adjustment means and the levelling means.

Alternatively, or additionally, the control means may cause the activation means to activate the lock when the vehicle is stationary at a loading bay. The vehicle will then be held at its normal ride height during loading and unloading.

Manual or automatic control means may be provided.

Very suitably the activation means are so controlled that the lock is not deactivated, on completion of loading or unloading, until the pressure in the air springs of the suspension system is greater than that in the hydraulic shock absorbers.

The activator means is very preferably pneumatic. The control means control the supply of air to the activator means, and in a preferred embodiment, open a normally-closed pilot exhaust valve connected in the air supply line to the activator means when the vehicle is in the predetermined condition(s).

The control means may comprise a manual pilot 3/2 valve which, when manually activated, causes passage of air to the exhaust valve, which is also a pilot 3/2 valve, to move it to an open state.

The air supply to the exhaust valve may suitably be via the adjustment means, the adjustment means being so arranged as to allow air passage therethrough when the vehicle chassis has been raised above and/or lowered below its normal travelling height. The adjustment means may comprise a raise/lower valve and in a vehicle in which a levelling valve is also provided, the above mentioned manual pilot 3/2 valve may also serve to alternately activate the raise/lower valve and the levelling valve. This makes for a simple and practical valving arrangement in which a single control means, i.e., the manual pilot 3/2 valve, controls not only the shock absorber(s) but also determines whether the vehicle chassis is held at a constant height or is raised/lowered for loading/unloading.

The activator means may comprise, for each shock absorber, a pneumatic piston and cylinder device, a cam mounted on the piston such that movement of the piston causes rotation of the cam, the cam acting on the valve stem of a valve which controls fluid flow in the shock absorber. The shock absorber(s) may be of the type in which a piston moves within a reservoir of hydraulic fluid, the reservoir being connected to a supply of hydraulic fluid, flow between the reservoir and the supply being controlled by the valve. In the preferred embodiment, in which, when the vehicle is in the predetermined condition(s), the control means vent the air supply to the activator means, the pneumatic piston and cylinder device(s) thereof will cause closing of the valve so that fluid will be trapped within the reservoir in each shock absorber. This will turn the, or each, shock absorber into, in effect, a ram which will resist loading placed on the vehicle load bed.

The invention will now be further described by way of example with reference to the accompanying drawings in which:-

Figure 1 is a circuit diagram of the pneumatic system of a vehicle in accordance with the invention;

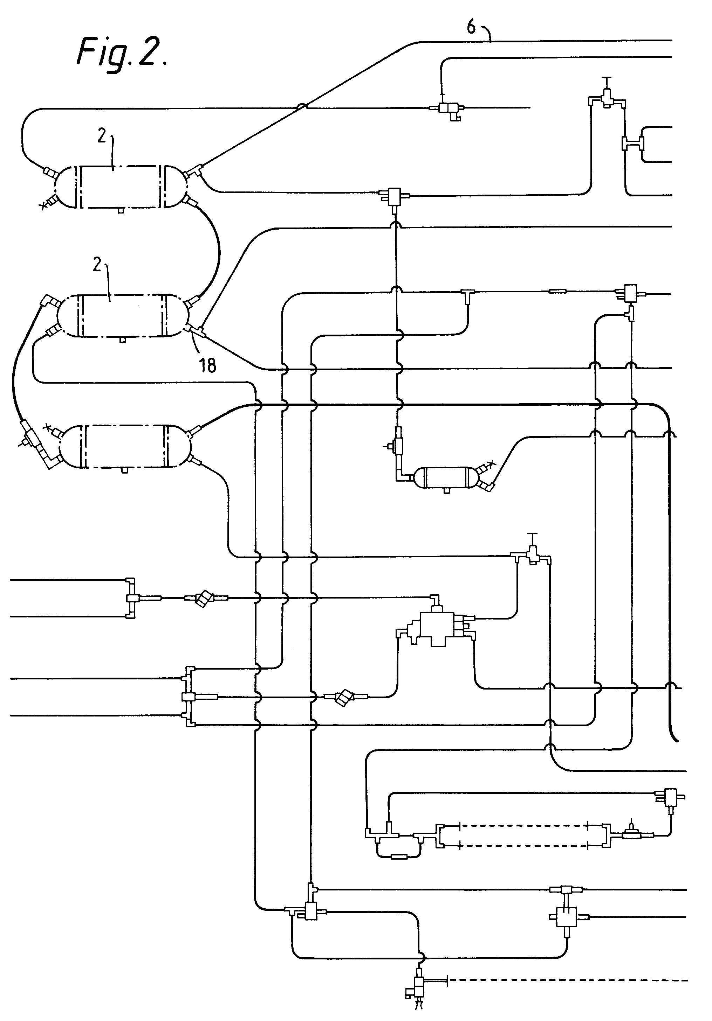

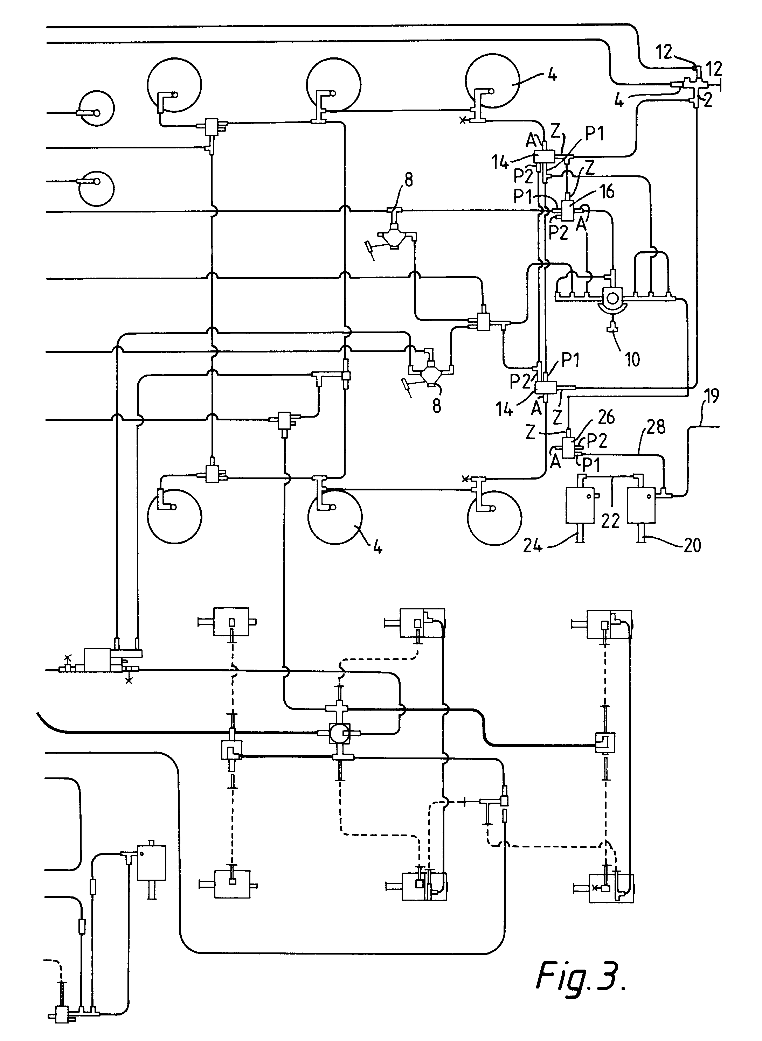

Figures 2 and 3 are enlarged views of respectively the right and left hand portions of the circuit diagram of Figure 1;

Figure 4 is a side view of an activator means and a shock absorber of a vehicle in accordance with the invention;

Figure 5 is a section taken along the line A-A of Figure 4;

Figure 6 is a sectional view taken along the line B-B of Figure 5;

Figure 7 is an enlarged sectional view of part of the shock absorber of Figure 4; and

Figure 8 is an enlarged view of an alternative form for the part shown in Figure 7.

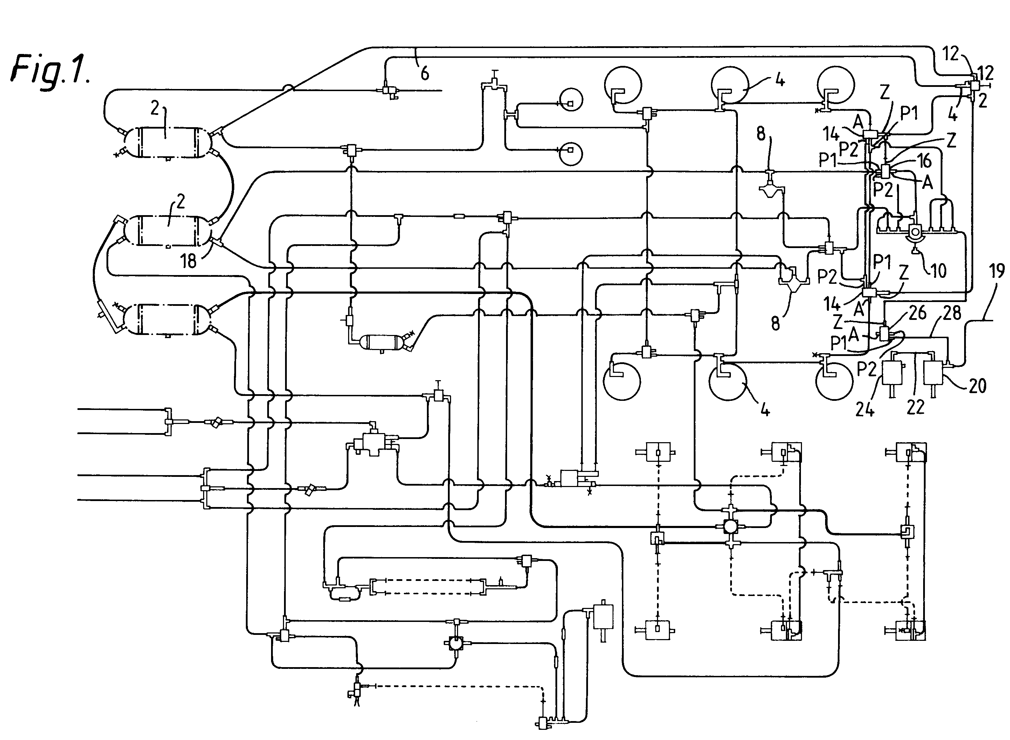

Figure 1 shows the complete pneumatic system for a vehicle. Only those parts which are relevant will be described herein.

The system comprises inter alia a number of air tanks 2 which serve to supply a plurality of air springs 4 provided between the vehicle's axle and its chassis. The air springs 4 serve to suspend the load in the vehicle. The tanks 2 and air springs 4 are connected by air lines 6.

The system includes two levelling valves 8, each of which is operable to pass air from the tanks 2 to the air springs 4 or exhaust air from the air springs 4, to maintain the vehicle at a particular travelling height. The system further includes a raise/lower valve 10 movable manually between five positions, in the first four of which the levelling valves 8 are bypassed and instead air passage to the air springs 4 is controlled by the raise/lower valve 10. In the fifth position, the raise/lower valve 10 is itself bypassed and the passage of air from the air tanks 2 to the air springs 4 is controlled by one of the levelling valves 8.

In the first position the raise/lower valve 10 serves to supply air to the air springs 4 to raise the level of the load bed of the vehicle above its normal travelling position, as set by one or other of the levelling valves 8. In the second position the raise/lower valve 10 serves to exhaust air from the air springs 4 to lower the load bed below is normal travelling position. In its third and fourth positions the raise/lower valve 10 serves to hold the load bed in respectively a raised or lowered position.

The system further includes a manual pilot 3/2 valve 12 which incorporates a plunger. When the plunger is manually pushed in the ports 1 2 and 2 of the manual pilot 3/2 valve 12 are connected. This causes air to pas to the Z-ports of two pilot 3/2 valves 14 which are positioned in the lines to the air springs 4. The passage of air to these two pilot 3/2 valves 14 acts as a signal to cause them to change state from a position in which they allow passage of air from one or other of the levelling valves 8 to the air springs 4 to a position in which they allow passage of air to the air springs 4 from the raise/lower valve 10.

Simultaneously, air is supplied to the Z-port of a third pilot 3/2 valve 16 to cause this to move from a closed position to an open position in which air can pass from outlet 18 of one of the tanks 2 to the raise/lower valve 10. Thus an air flow path from the tanks 2 to the air springs 4 controlled by the raise/lower valve 10 is provided.

Air from tanks 2 is also supplied, by pipe 19, to an air chamber 20 and thence, via pipe 22, to a second identical chamber 24. A pilot 3/2 exhaust valve 26 is connected to air chamber 20 by pipe 28. This is normally closed and as a result, normally serves to prevent escape of air from air chamber 20 and air chamber 24 to the atmosphere. Supply of air to the exhaust valve 26 causes it to change to an open state in which it vents the air chambers 20 and 24.

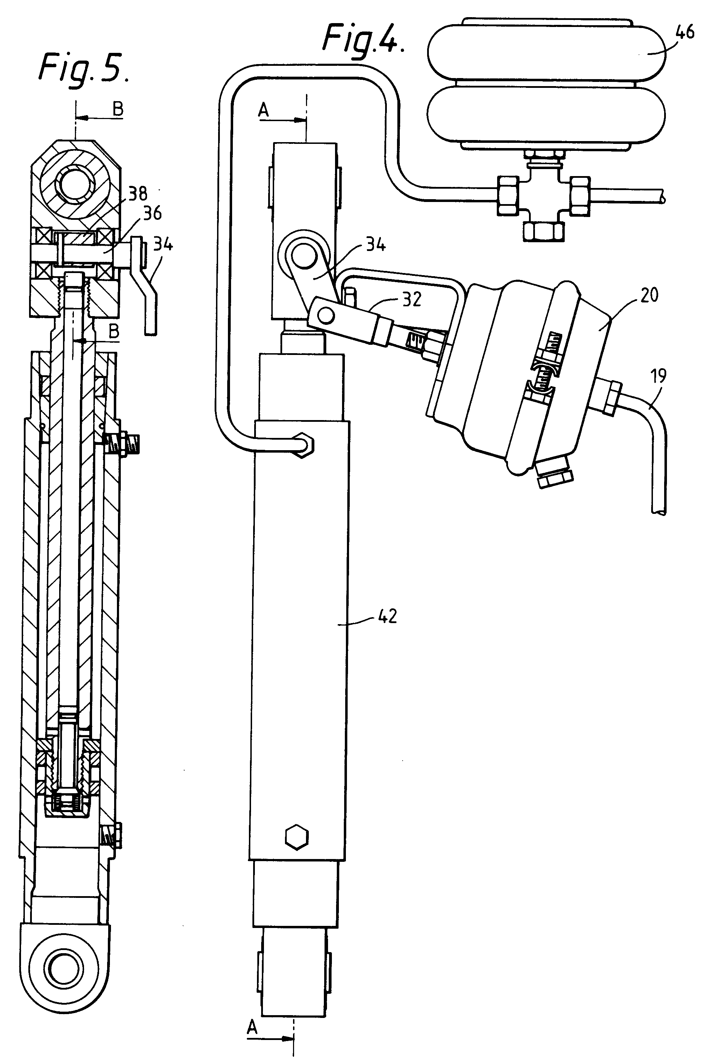

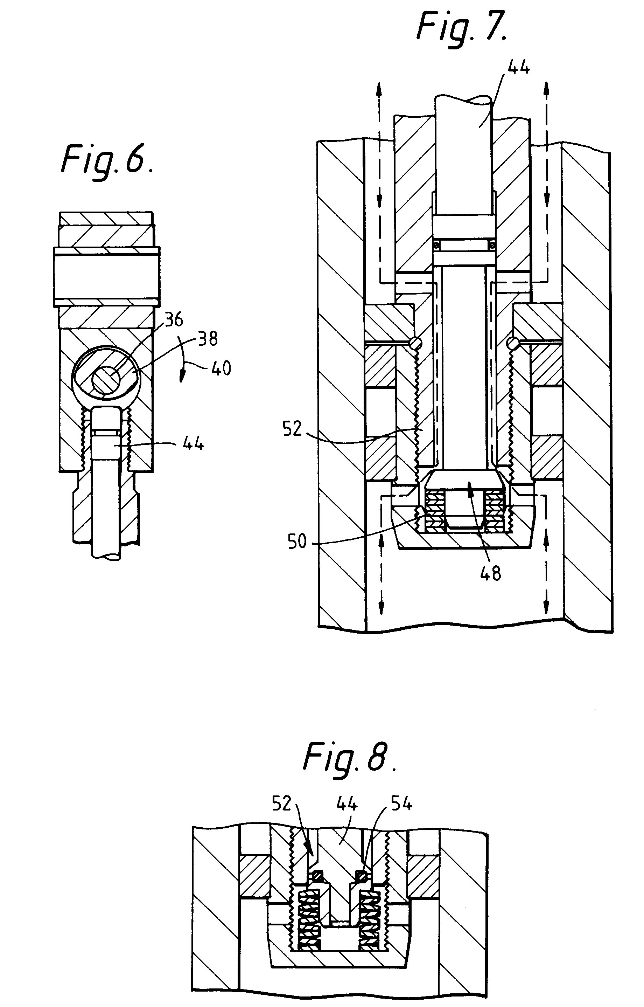

One of the air chambers 20 is shown in Figure 4. Supply of air thereto via pipe 19 causes a piston 32, appropriately mounted to the air chamber 20, to extend. The piston 32 has pivotally connected thereto a lever 34. Movement of the piston 32 causes rotation of the lever 34 and, in turn, rotation of a pin 36 to which the lever 34 is connected. The pin 36 carries thereon a cam 38, see Figure 6, which will rotate with the pin 36 in the direction shown in arrow 40 of Figure 6.

The pin 36, lever 34 and cam 38 are attached above one of the vehicle shock absorbers 42 in a position such that rotation of the cam 38 will bring it into contact with the piston 44 of the shock absorber 42 and therefore cause it to force this piston 44 downwards.

The shock absorber 42 is of the type which includes an oil reservoir from and to which oil flows from an oil supply 46. The flow of oil under normal conditions through the shock absorber 42 is shown in the dotted arrows of Figure 7.

The piston 44 carries on its lower end a valve seat 48. Springs 50 bias the piston 44 upwards towards a position in which the valve seat 48 is in contact with an insert 52 which will prevent oil flow through the shock absorber 42. The cam 38, in its normal, activated position, pushes down on the piston 44 against the springs 50 to allow the flow of oil.

When the cam 38 is rotated as a result of the air in the air chamber 20 being exhausted to the atmosphere, it moves out of contact with the piston 44 which is then forced upwards by the spring 50 to bring valve seat 48 into contact with insert 52 and thereby prevent oil flow within the shock absorber 42. The shock absorber 42 then acts as a ram, i.e., it is solid.

Air chamber 24 serves in a similar fashion to control a second shock absorber.

The air chambers 20 and 24 are exhausted to the atmosphere by opening normally-closed exhaust valve 26. The raise/lower valve 10 is arranged to cause this in its third or fourth positions. In either of these, air passes from the raise/lower valve 10 to the Z-port of pilot 3/2 exhaust valve 26, which then opens.

Thus, when the raise/lower valve 10 is in its third or fourth position, that is, when it locks the load bed of the vehicle in a raised or lowered positioned, the shock absorbers 42 thereof act as rams. They therefore serve to prevent excessive movement of the load bed, in particular when this is locked in a raised position.

Figure 8 shows an alternative valving arrangement for the shock absorber 42. This differs simply in that the valve is constituted by an O-ring 54 carried on the piston 42 which, when cam 38 is moved out of contact with the piston 44, seals against insert 52.

To "release" the shock absorbers 42, that is, to allow oil to flow therein, the air chambers 20 and 24 need to be supplied with air. This is automatically achieved when the raise/lower valve 10 is manually or automatically moved to the "raise", "lower" or "ride" positions. When this occurs the air supply to the Z-port of the pilot 3/2 exhaust valve 26 is cut. The effect of exhausting the Z-signal to the pilot 3/2 valve 26 is that this changes to its normal closed state and thus serves to prevent exhaustion of air from the air chambers 20 and 24 via pipes 28 and 22 respectively. The pistons 32 carried on the air chambers 20 and 24 therefore extend causing rotation of the cams 38 into a position in which they once again force down the pistons 44 of the shock absorbers 42 against the bias of the springs 50. Oil flows through the shock absorbers 42 which are then capable of resisting oscillating spring forces as normal.

The system may include a pressure-sensing arrangement operatively connected in the line to the pilot 3/2 exhaust valve 26 to prevent that valve 26 from closing and the shock absorbers 42 being "released" until the pressure in the air springs 4 is greater than the pressure beneath the pistons 44 in the shock absorbers 42. This will ensure that the air springs 4 are fully supporting the vehicle chassis on "release" of the shock absorbers 42 so that there will be no sudden drop of the chassis when the shock absorbers cease to act as solid rams.

With the above described arrangement, the shock absorbers of a vehicle are rendered capable of also acting as solid links which resist excessive vehicle chassis movement relative the axles thereof when the vehicle is loaded and prevent raising or lowering of the chassis on loading or unloading. They therefore serve a dual purpose. The shock absorbers are automatically moved from one state to another in response to the vehicle's state. When damping of objectionable spring oscillations is required, they act as typical shock absorbers but when load resistance is required, they act as solid rams.

It will be appreciated that the shock absorbers could be "locked" in situations other than when the vehicle is held in a raised or lowered position. Nor is it necessary to control the activating air chambers by way of a raise/lower valve. Indeed, lockable shock absorbers could be provided on a vehicle without a raise/lower valve to hold the vehicle fixed at its normal ride height for the purposes of loading/unloading in which case a manually operated exhaust valve for the air chambers would be provided.

**Claims**

1. A vehicle having one or more hydraulic shock absorbers and means for activating a lock which prevents hydraulic fluid flow within the shock absorber(s).

2. A vehicle as claimed in Claim 1 wherein control means is provided for the activator means to cause it to activate the lock when the vehicle is in one of a number of predetermined conditions.

3. A vehicle as claimed in Claim 2 wherein means for adjusting the vertical position of at least the rear of the chassis of the vehicle is provided and wherein one of the predetermined vehicle conditions is that the chassis has been raised above and/or lowered below its normal travel position by the adjustment means.

4. A vehicle as claimed in Claim 3 wherein the control means include the adjustment means.

5. A vehicle as claimed in either Claim 3 or Claim 4 wherein levelling means is provided operable to maintain the height of the vehicle chassis at a predetermined level, the control means including a control device operative to alternately activate the adjustment means and the levelling means.

6. A vehicle as claimed in any one of Claims 2 to 5 wherein the activator means is pneumatic, the control means controlling the supply of air thereto.

7. A vehicle as claimed in Claim 6 wherein the control means open a normally closed pilot exhaust valve connected in the air supply line to the activator means when the vehicle is in the predetermined condition(s).

8. A vehicle as claimed in any preceding Claim wherein the activator means comprise, for each shock absorber, a pneumatic piston and cylinder device, a cam mounted on the piston such that movement of the piston causes rotation of the cam, the cam acting on the valve stem of a valve which controls fluid flow in the shock absorber.

9. A vehicle as claimed in any preceding Claim wherein the shock absorber(s) is of the type in which a piston moves within a reservoir of hydraulic fluid, the reservoir being connected to a supply of hydraulic fluid, the connection being controlled by a valve, closure of which prevents fluid flow from or to the reservoir.

10. A vehicle as claimed in any preceding Claim having an air suspension system wherein means is provided to prevent deactivation of the lock when the pressure in the air suspension system is less than that in the hydraulic shock absorbers.

11. A vehicle as claimed in any one of Claims 2 to 10 in which the control means comprises a manual pilot 3/2 valve.

# Fig.1.

EP 0 517 546 A1

Fig.2.

Fig.3.

Fig.5.

Fig.4.

38
36
34

46

34

32

20

19

42

A

Fig.6.

Fig. 7.

Fig. 8.

10

**European Patent Office**

## EUROPEAN SEARCH REPORT

Application Number

| | DOCUMENTS CONSIDERED TO BE RELEVANT | | EP 92305190.8 |
|---|---|---|---|

| Category | Citation of document with indication, where appropriate, of relevant passages | Relevant to claim | CLASSIFICATION OF THE APPLICATION (Int. Cl.5) |
|---|---|---|---|
| X | CH - A - 625 021 <br> (ITT INDUSTRIES) <br> * Abstract; summary; <br> first, second paragraphs * <br> -- | 1 | B 60 G 17/005 <br> F 16 F 9/44 |
| A | US - A - 4 177 977 <br> (SEKIGUCHI) <br> * Fig. 2; pos. 128,130 * <br> -- | 1 | |
| A | GB - A - 2 161 892 <br> (BOGE) <br> * Abstract * <br> -- | 1 | |
| A | EP - A - 0 362 038 <br> (AIRAX) <br> * Fig. 1; pos. 2,4,5,6 * <br> -- | 1 | |
| A | US - A - 4 773 671 <br> (INAGAKI) <br> * Fig. 1 * <br> -- | 1 | TECHNICAL FIELDS SEARCHED (Int. Cl.5) |
| A | DE - A - 3 300 662 <br> (MANNESMANN) <br> * Fig. 1; abstract * <br> ---- | 1 | B 60 G <br> F 16 F |

The present search report has been drawn up for all claims

| Place of search | Date of completion of the search | Examiner |
|---|---|---|
| VIENNA | 03-09-1992 | PANGRATZ |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                                                
& : member of the same patent family, corresponding
    document

EPO FORM 1503 03.82 (P0401)